# EUROPÄISCHE PATENTSCHRIFT

(11) **EP 1 210 815 B1**
(45) Veröffentlichungstag und Bekanntmachung des Hinweises auf die Patenterteilung: **13.02.2013**
(21) Anmeldenummer: 00969194.0
(22) Anmeldetag: 18.08.2000
(51) Int. Cl.: H04M 15/00, H04M 15/28, H04L 12/14

(54) **Verfahren zur zeitversetzten, und kostengünstigen Datenübertragung zwischen Internet Dienstanbieter, Dienstanbieter und Endgerät**
Method for deferred and cost effective data transmission between Internet service provider, service provider and terminal
Procédé de transmission de données retardée et bon marché entre le founisseur de services INTERNET, le fournisseur de services et le terminal

(30) Priorität: 20.08.1999 DE 19939151
(43) Veröffentlichungstag der Anmeldung: 05.06.2002
(73) Patentinhaber: T-Mobile Deutschland GmbH, 53227 Bonn (DE)
(72) Erfinder: KELLER, Walter, 40880 Ratingen (DE)
(74) Vertreter: Riebling, Peter
(86) Internationale Anmeldenummer: PCT/DE2000/002836
(87) Internationale Veröffentlichungsnummer: WO 2001/015425

(56) Entgegenhaltungen:
- WO-A-98/02828
- WO-A-98/41006
- WO-A-98/58474
- WO-A-99/30247
- BUSSE ET AL: "Accounting management for global broadband connectivity services" NETWORK OPERATIONS AND MANAGEMENT SYMPOSIUM, 1998. NOMS 98., IEEE NEW ORLEANS, LA, USA 15-20 FEB. 1998, NEW YORK, NY, USA,IEEE, US, 15. Februar 1998 (1998-02-15), Seiten 159-168, XP010267365 ISBN: 0-7803-4351-4

## Beschreibung

Die Erfindung betrifft ein Verfahren zur Anzeige von Übertragungs- und Dienstekosten eines Teilnehmers bei der Nutzung von Telekommunikationsnetzen, insbesondere für paketorientierte Datenübertragung sowie für Internet- und Onlinedaten, nach dem Oberbegriff des Patentanspruchs 1.

Die derzeit häufigste Anwendung von Datenübertragungsverfahren stellt die Nutzung von Online- und Internetdiensten dar.

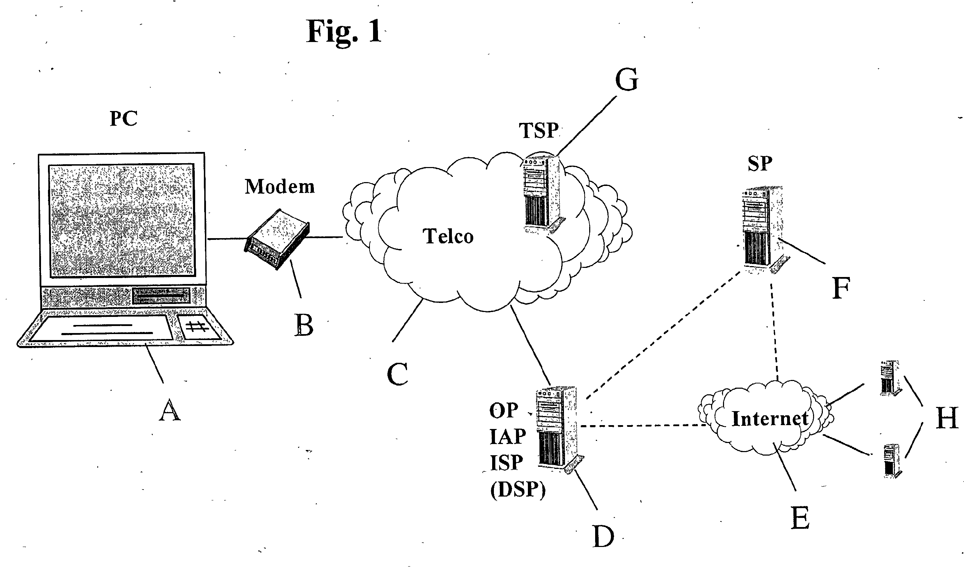

Die übliche Verfahrensweise, zumindest in der Bundesrepublik Deutschland, für den Online- und Internetzugang ist in Figur 1 angegeben. Ein Teilnehmer ist mit seinem Personal Computer (1) mittels Modem (2) an ein Telekomunikationsnetz (3), beispielsweise das analoge Fernsprechnetz oder das ISDN-Netz angeschlossen. Hiermit stellt er eine Wählverbindung zum betreffenden Internet Access Provider (IAP), zum Internet Service Provider (ISP) oder zum Onlineprovider (OP) her (4). Der Unterschied zwischen diesen Instanzen besteht darin, daß der IAP lediglich den Netzübergang zwischen Telekommunikationsnetz und öffentlichem Internet (5) herstellt, während der ISP selbst Internet Dienstleistungen anbietet. So kann man beispielsweise über seinen IAP beliebige ISP im Internet erreichen. In der Praxis vermischen sich die Verhältnisse dadurch, daß viele IAP auch Dienstleistungen anbieten. Ein OP bietet Onlinedienste, d. h. Datendienste im direkten Zugriff an. Das müssen nicht unbedingt Dienste auf Internet Protokoll Basis sein. So wurden von T-Online beispielsweise jahrelang Bildschirmtextdienste (Btx) angeboten, noch bevor das Internet seine heutige Popularität erlangte. Der Begriff OP hat sich etabliert, auch wenn heute zunehmend Dienste auf Internet Protokollstruktur angeboten werden.

Zwecks Vereinfachung werden die Begriffe hier zum Begriff Data Service Provider (DSP) zusammengefaßt, worunter nachfolgend ein Dienstleister verstanden wird, der sowohl den Internet-Zugang für Teilnehmer, die am Telekommunikationsnetz angeschlossen sind, als auch möglicherweise selbst Dienstleistungen bietet, wie beispielsweise E-Mail Accounts, Internet-Präsentationen für Teilnehmer, Banktransaktionen, Wettervorhersage, Nachrichtendienste, Diskussionsforen, Warenangebote etc. Diese Dienste wird er in der Regel nicht alle selbst inhaltlich gestalten, sondern es bestehen Geschäftsverhältnisse zu Vertragspartners (Service-oder Contentprovider S/CP), wie Banken, Warenhäuser, Nachrichtenredaktionen etc.

Die Aufgabe des DSP besteht hauptsächlich in der Vermittlungssituation zwischen Anbieter (F4) und Teilnehmer (1). Hierzu sind abgesprochene EDV-Schnittstellen und Übertragungsprotokolle, schnelle Leitungsanschlüsse und insbesondere eine repräsentative Präsentation der Unternehmenszugänge innerhalb einer Titelseite (Portal) oder beispielsweise einer Kartei oder Datenbank des DSP erforderlich, damit die Teilnehmer diesen Zugang möglichst leicht finden und das Angebot nutzen können.

Gegebenenfalls bestehen Zahlungsübereinkünfte, wodurch eine Kostenabrechnung von S/CP-Leistungen über die DSP-Rechnung erfolgt, wie beispielsweise bei den T-Online-Diensten (im früheren Btx-Bereich). Ebenso bestehen teilweise Vertragsverhältnisse zwischen Telekommunikationsnetzbetreiber und DSP, wie beispielsweise zwischen Telekom und T-Online, wodurch keine getrennte Rechnung von T-Online erfolgt, sondern die T-Online-Kosten über die monatliche Fernmelderechnung abgerechnet werden.

Weiterhin kann davon ausgegangen werden , daß zukünftig Telekommunikationsnetzbetreiber eigene Datendienste für ihre Kunden anbieten, wobei dies beispielsweise ebenfalls mit Unterstützung von S/CP erfolgen kann. Beispielsweise zeichnen sich solche Verfahren im GSM-Mobilfunkbereich ab. Hierzu sei auf "The GSM System for Mobile Communications", Cell & Sysy Verlag Palaiseau/ Frankreich ISBN 2-9507190-0-7 verwiesen, wo beschrieben ist, daß zunehmend Dienste über Short Message Service SMS, zukünftig jedoch vorzugsweise über General Packet Radio Service GPRS, einem auf Internet Protokoll Basis standardisierten Paketdienst, durchgeführt werden, vgl. auch "Digital Cellular Telecommunications System" (Phase 2+), General Packet Radio Service, ETSI Draft EN 301 113.

Alle verwendeten Verfahren besitzen derzeit den Nachteil, daß wegen der nichttrivialen Kostenstruktur mit mehreren beteiligten Unternehmen (Telekommunikationsnetz, DSP, S/CP) und jeweils komplizierten Tarifstrukturen, keine laufende Kostenkontrolle durch den Teilnehmer gegeben ist. Er kann jeweils erst am Ende eines Rechnungszeitraumes, beispielsweise monatlich, nachträglich erfahren, welche Kosten er verursacht hat.

Es ist daher eine Verbesserung der Situation durch die Einführung eines automatischen Verfahrens zur Ermittlung und Anzeige der laufenden Gesamtkosten wünschenswert.

Ein verbessertes Verfahren zur Anzeige von Übertragungs- und Dienstekosten eines Teilnehmers ist in der WO 98/58474 A1 offenbart. Der Diensteanbieter ermittelt eine Gebühreninformation über die entstehenden Kosten während einer laufenden Verbindung unter Zugriff auf die eigene Gebührendatenbank, in der eine Gebührendatenverwaltung erfolgt, und überträgt sie nach der Verbindung auf Anforderung oder automatisch zum Endgerät des Teilnehmers. Eine Anzeige der Kosten während der Verbindung und eine Berücksichtigung von Kosten von an der Verbindung beteiligten Dienste- und Contentanbieter ist nicht beschrieben.

WO 98/02828 A2 offenbart ein Verfahren und System zur Kostenzuteilung in einem verteilten Rechnernetzwerk mit mehreren Benutzerterminals, bei dem jedem Benutzerterminal die verursachten Kosten für eine Internetverbindung sowie für in Anspruch genommene Dienste und Waren zugeordnet werden. Das ermöglicht eine Kontrolle der von jedem Benutzerterminal verursachten Kosten. Eine Berechnung der aktuellen Kosten während einer Verbindung und eine Übertragung der Kosten an das Benutzerterminal ist nicht vorgesehen.

Der vorliegenden Erfindung liegt die Aufgabe zugrunde, eine zeitlich flexible Datenübertragungsstruktur zu schaffen, die dem Benutzer erlaubt, die gewünschten Dienste unter Abwägung der Kosten zu für ihn optimalen Zeitpunkten einzuleiten.

Gelöst wird diese Aufgabe durch die kennzeichnenden Merkmale des Patentanspruchs 1.

Die Erfindung basiert darauf, daß der Diensteanbieter eine Gebühreninformation über die entstehenden Gesamtkosten während einer laufenden Verbindung unter Zugriff auf die eigene Gebührendatenbank, sowie unter Zugriff auf vergleichbaren Einrichtungen der an der Verbindung beteiligten Dienste- oder Contentanbieter und des/der beteiligten Telekommunikations- und Übertragungsnetze stets aktuell ermittelt und auf Anforderung oder automatisch zum Endgerät des Teilnehmers überträgt.

In der Gebührendatenbank werden die Gebührendaten verwaltet, d.h. es sind alle teilnehmerspezifischen und servicespezifischen Gebührenprinzipien sowie die teilnehmerspezifischen Vertragsdaten (Preise, Boni, Abonnements, Sperren etc.) gespeichert.

Gemäß der Erfindung erfolgt eine diensteanbieterseitige Übermittlung besonders gekennzeichneter Prognosedaten (Angebotskosten) für bevorstehende kostenintensive Service- oder Übertragungsangebote, die unter Ermittlung der betreffenden Service- und/oder Übertragungskosten in Zusammenarbeit mit den angeschlossenen Instanzen und Telekommunikationsnetzen durchgeführt wird, wobei wahlweise eine teilnehmerseitige Aktivierung (Bestellung) oder eine Ablehnung der Dienstleistung bzw. der Übertragung erfolgen kann. Somit kann sich der Teilnehmer bereits vor Nutzung eines Dienstes oder vor einer Datenübertragung über die voraussichtlichen Kosten informieren.

Um abhängig von der Tageszeit Übertragungskosten zu sparen, kann der Teilnehmer über zusätzliche endgeräteseitige Menuepunkte optional eine Inanspruchnahme von Dienstleistungen und/oder Übertragungen alternativ zu einem späteren Zeitpunkt beauftragen, zu dem eine kostengünstigere Inanspruchnahme durch automatische endgeräteseitige oder alternativ diensteanbieterseitige Aktivierung erfolgt, beispielsweise ein Download umfangreicher Dateien zum Nachttarif.

In diesem Zusammenhang ist erfindungsgemäß ferner vorgesehen, daß der Teilnehmer optional zusätzlich eine sofortige Übertragung der angebotenen Daten eines entfernten Internet Service Provider zum Diensteanbieter einleiten kann, wobei die Datenübertragung (abholen oder zustellen) der betreffenden Daten zwischen Diensteanbieter und Endgerät zu einem späteren Zeitpunkt getrennt erfolgen kann, was insbesondere dann vorteilhaft ist, wenn der Teilnehmer über eine teure Telekommunikationsleitung zum Diensteanbieter verfügt und Übertragungsengpässe im Internet vorhanden sind, so daß die kostenintensive Telekommunikationsleitung in einer burstartigen Übertragung zwischen Diensteanbieter und Endgerät wirtschaftlicher genutzt werden kann.

Gemäß der Erfindung erfolgt der diensteanbieterseitige Zugriff auf die Gebührendatenbanken der beteiligten Instanzen je nach realisierter Ausführungsart wahlweise automatisch durch direkte Übermittlung der bei den Instanzen entstandenen anteiligen Kosten als Antwort auf eine spezifische diensteanbieterseitige Anfrage zu Beginn jeder Verbindung. Dabei werden die bei den beteiligten Instanzen entstehenden anteiligen Kosten vorzugsweise automatisch aktualisiert.

Es kann auch ein automatischer diensteanbieterseitiger Zugriff auf die entsprechenden Datensätze der Datenbanken der beteiligten Instanzen erfolgen. Der Datenzugriff sowie die übertragenen Daten werden vorzugsweise mittels geeigneter Verfahren gegen Mißbrauch geschützt.

Eine andere Ausführungsform sieht vor, daß die diensteanbieterseitig zu übertragenden Gebührendaten zum Endgerät optional über teilnehmerseitige Konfiguration in Art und Umfang der Zustellung konfiguriert werden können, wodurch beispielsweise eine automatische permanent aktualisierte Zustellung nur der Gebührensumme, oder beispielsweise der kompletten Einzelnachweise über die Gebühren erfolgen kann.

Wahlweise kann beispielsweise eine teilnehmerseitige Betrachtung der Gebührendaten in der Diensteanbieter-Datenbank ohne automatische Zusteillung erfolgen, wobei die teilnehmerseitige Konfigurationsmöglichkeit vorzugsweise mittels geeigneter Verfahren gegen Mißbrauch geschützt ist.

Bedarfsweise kann vorteilhaft eine Nachbearbeitung der Gebührendaten im teilnehmerseitigen Endgerät erfolgen, wodurch beispielsweise unterschiedliche Anzeigeformate und Detaillierungsgrade darstellbar sind.

Zur einfachen Nutzung des erfindungsgemäßen Verfahrens ist ein endgeräteseitiger Softwareanteil (Client) vorgesehen, der mit der T/DSP-Gebührendatenbank zusammenarbeitet und unmittelbar innerhalb der Zugangs- oder Browsersoftware angeordnet ist.

Die Erfindung wird nachfolgend unter Verwendung von Zeichnungsfiguren, die hier lediglich eine mögliche Ausführungsart am Beispiel einer Internet-Übertragung und einem PC als Endgerät beschreiben, erläutert, wobei sich anhand der Zeichnungsfiguren weitere Merkmale, Anwendungsgebiete und Vorteile der Erfindung ergeben. Es zeigen:
- Figur 1:: Darstellung einer typischen Internetverbindung (Stand der Technik);
- Figur 2:: Darstellung einer Internetverbindung mit erfindungsgemäßer Erweiterung zur Kostenanzeige;
- Figur 3:: Beispiel für zwei unterschiedliche Darstellungsarten der Verbindungskosten.

Figur 1 betrifft die Darstellung einer typischen Internetverbindung und wurde bereits weiter oben erläutert.

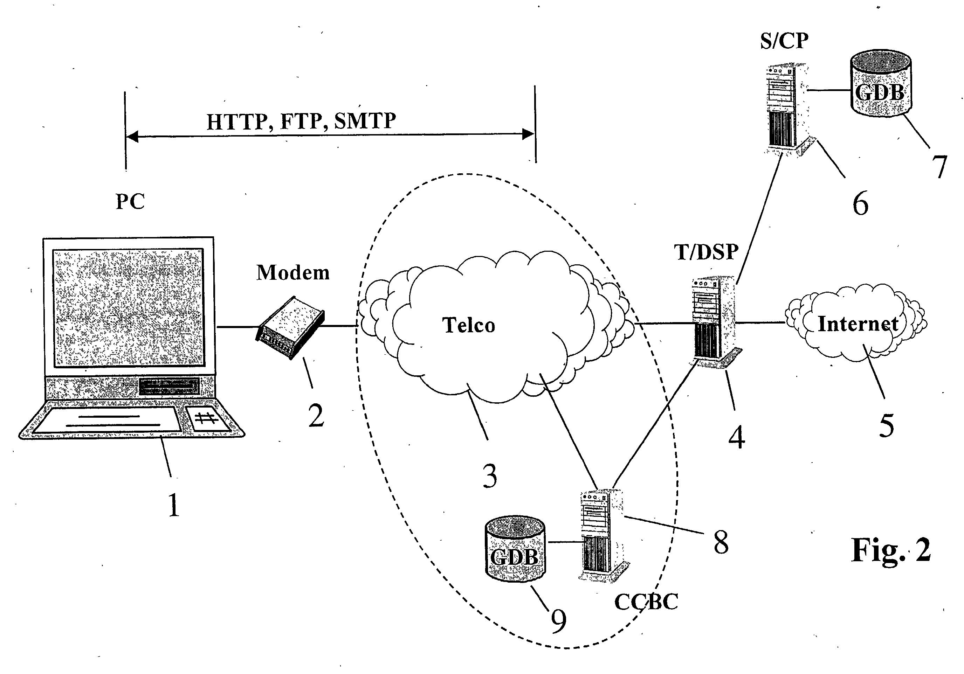

Fig. 2 zeigt die prinzipielle erfindungsgemäße Verfahrensweise. Der Teilnehmer ist in üblicher Weise mit seinem Endgerät 1 über ein Modem 2 mit dem Telekommunikationsnetz 3 verbunden und stellt dadurch eine Verbindung mit seinem Diensteanbieter 4 her. Hierbei ist es unerheblich, ob das Verfahren für einen Telecommunication Service Provider (TSP) innerhalb eines Telekommunikationsnetzes als Diensteanbieter, oder einen Data Service Provider (DSP) im Anschluß an ein Telekommunikationsnetz angewandt wird. Beide Diensteanbieter 4 sind daher in der schematischen Abbildung unter der Bezeichnung (T/DSP) zusammengefaßt.

Aufgrund der verwendeten Protokollverbindung besteht in der Regel eine Ende-zu-Ende-Verbindung zwischen dem Endgerät 1 des Teilnehmers, je nach Netz ein PC, ein Mobilfunkgerät o. ä., sowie dem Diensteanbieter 4.

Erfindungsgemäß ermittelt der Diensteanbieter 4 die jeweiligen Gesamtkosten einer Verbindung z.B. Internetverbindung und überträgt sie zum Teilnehmer, wo sie in zweckdienlicher Darstellung vorzugsweise auf dem Endgerät 1 zur Anzeige gebracht werden.

Hierzu verfügt der Diensteanbieter 4 über Verbindungen zu den Gebührendatenbanken 7 seiner beteiligten Dienste- und Contentanbieter 6 (S/CP), wobei die entsprechende Gebühreninformation wahlweise automatisch seitens der Dienste- und Contentanbieter 6 übermittelt, seitens des Diensteanbieters 4 automatisch abgefragt, oder S/CP-seitig automatisch unter begrenzter S/CP - Zugriffserlaubnis auf die jeweiligen Speicherpositionen in der S/CP-Gebührendatenbank 7 ermittelt werden. Weiterhin verfügt der Diensteanbieter 4 über eine Verbindung zur Gebührendatenbank 9 des Telekommunikationsnetzes 3, was hier schematisch über den Zugriff auf das Customer Care und Billing Center 8 (CCBS) mit angeschlossener Gebührendatenbank 9 beispielhaft dargestellt ist. Je nach favorisierter Verfahrensweise und technischer Ausstattung, ist die automatische Übermittlung der laufenden Gebühren (beispielsweise Gebührenimpulse) zum Diensteanbieter 4 möglich, die dort anschließend bedarfsgerecht verarbeitet werden, oder es erfolgt eine Übermittlung höherwertiger Informationen, wie beispielsweise die Übertragung der aufsummierten Verbindungskosten. Optional können zur vollständigen Anzeige der Gesamtkosten durch den Diensteanbieter 4 auch Grundgebühr, bisherige kumulierte Monatsgebühren sowie weitere zweckdienliche Daten übermittelt werden. Alternativ zu dieser Verfahrensweise erhält der Diensteanbieter 4 einen begrenzten Zugriff auf die Gebührendatenbank 9 des Telekommunikationsnetzes 3 und ermittelt unter Einsicht der Vertragsdaten zwischen Telekommunikationsnetz 3 und Teilnehmer, die neben dem Gebührenimpuls zur Berechnung der tatsächlichen Kosten erforderlich sind, selbständig und automatisch die jeweils erforderlichen Werte.

Anschließend erfolgt wahlweise eine automatische Übertragung der Gebührendaten zum Endgerät 1 des Teilnehmers, die vorzugsweise jeweils aktuell dem aktuellen Gebührenstand angepaßt, wiederholt wird, oder die Information wird in einer jederzeit aktualisierten Datei bereitgehalten, die der Teilnehmer einsehen kann. In diesem Zusammenhang ist es vorteilhaft, wenn der Gebührenstand auch während der Betrachtung durch den Teilnehmer jeweils aktualisiert wird, wodurch anwenderseitig die Möglichkeit besteht, beispielsweise beim Arbeiten mit fensterorientierten grafischen Bildschirmoberflächen, ein entsprechendes Gebührenfester zu öffnen und über längere Zeit geöffnet zu halten. Hierbei überträgt der Diensteanbieter bei jeder Gebührenaktuaiisierung automatisch den aktualisierten Stand zum Teilnehmer.

Vorzugsweise können auf diese Art unterschiedliche Anzeigen, wie beispielsweise bisherige Gesamtkosten im Berechnungszeitraum (z. B. monatlich) und Kosten der laufenden Session getrennt angezeigt werden. Auch ist beispielsweise eine optionale Warnung bei einer voreingestellten Höchstgrenze möglich (Monatslimit).

Die Ermittlung von präventiven Kosteninformationen für bevorstehende Datenübertragungen von dritter Seite, beispielsweise File Transport Protokoll Dateien (FTP-Dateien) entfernter ISP über den Internetzugang des Diensteanbieters 4, wobei der Diensteanbieter 4 wegen der typischen Ende-zu-Ende-Verbindung im Internet 5 keinen Einfluß auf den Inhalt dieser Verbindung hat, erfolgt durch eine benutzerseitige Kostenabfrage beim Diensteanbieter 4, wobei er beispielsweise das Datenvolumen der anstehenden Übertragung entweder händisch, oder über eine automatische Prozedur unter Verwendung einer entsprechenden Abfragemaske zum Diensteanbieter 4 überträgt und dieser zumindest die prognostizierten eigenen Kostenanteile und die Telekommunikationsnetzkosten für die Transferleistung berechnen kann.

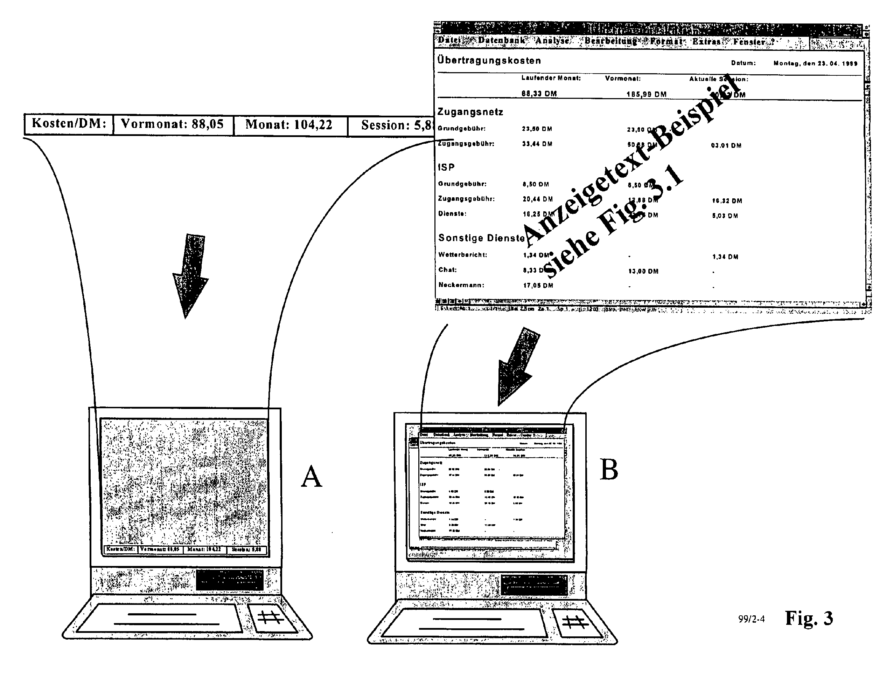

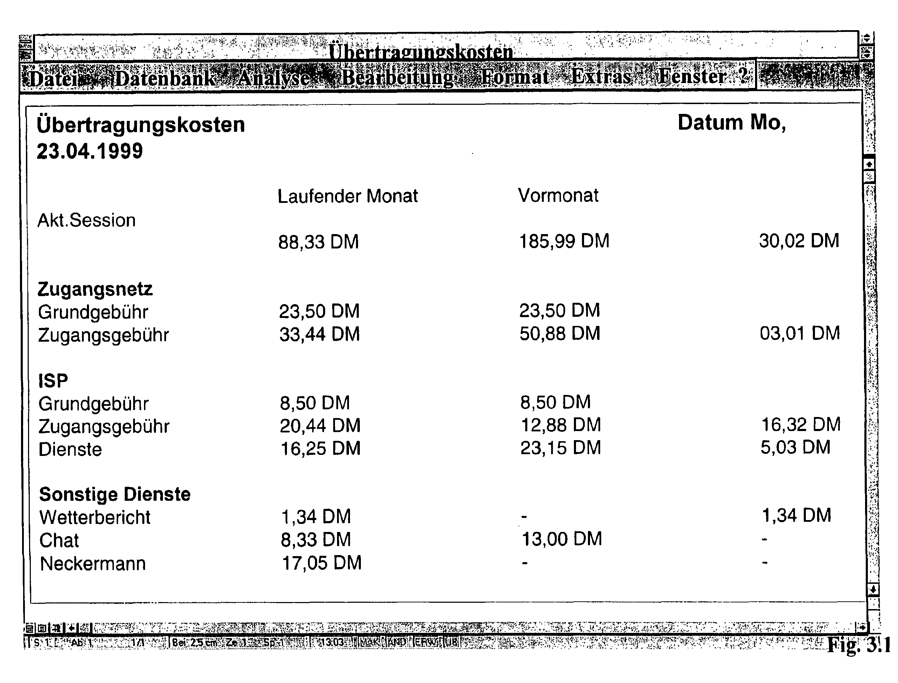

Figur 3 stellt beispielhaft zwei prinzipiell unterschiedliche Darstellungsarten vor. Während Variante A eine permanente Kosteninformation in Kurzform, durch Bildschirmanzeige an exponierter Stelle, oder beispielsweise Einblendung in einem entsprechender Position des Intemet-Browsers oder der Online-Zugangssoftware bietet, wird bei Variante B ein unabhängiges Fenster der grafischen Benutzerobrfläche zur Anzeige verwendet, wobei hier optional mehr Informationen, beispielsweise ein Einzelnachweis, angezeigt werden können. Eine Kopplung beider Verfahren in der Art, daß beim Selektieren und Aktivieren der Kurzanzeige, ein eigenes Kosteninformationsfenster mit erweiterter Information geöffnet wird, ist ebenfalls möglich.

Die Ermittlung der präventiven Kosten einer bevorstehenden Übertragung sind in dem Fall möglich, wenn eine Information zum bevorstehenden Datenumfang vorhanden ist. Dies ist insbesondere bei FTP-Verkehr häufig der Fall, wenn beispielsweise eine Download-Datei mit Angabe der Datenmenge zur Verfügung stellt.

Optional kann ein zusätzliches Bedienmenue zur Anzeige kommen, welche die Aktivierung unterschiedliche Übertragungsoptionen, wie eine spätere kostengünstigere automatische Übertragung, beispielsweise im POP-Betrieb (PC leitet automatisch die Verbindung ein) oder im PUSH-Betrieb (Diensteanbieter leitet automatisch die Verbindung ein) oder beispielsweise eine Zwischenlösung mit sofortiger Übertragung seitens eines entfernten ISP zum Diensteanbieter mit temporärer Zwischenspeicherung und späterer Übertragung über das Telekommunikationsnetz ermöglicht.

## Patentansprüche

1. Verfahren zur Anzeige von Übertragungs- und Dienstekosten eines Teilnehmers bei der Nutzung von Telekommunikationsnetzen, insbesondere für paketorientierte Datenübertragung in Telekommunikationsnetzen sowie für Internet- und Onlinedaten, wobei der Diensteanbieter (4) eine Gebühreninformation über die entstehenden Gesamtkosten während einer laufenden Verbindung unter Zugriff auf die eigene Gebührendatenbank, in der eine Gebührendatenverwaltung erfolgt, ermittelt und nach der Verbindung auf Anforderung oder automatisch zum Endgerät (1) des Teilnehmers überträgt, **gekennzeichnet durch** das Ermitteln und Übertragen der Gebühreninformation an das Endgerät (1) stets aktuell auch während einer Verbindung unter Zugriff auf die Gebührendatenbank, in der alle teilnehmerspezifischen und dienstespezifischen Gebührenprinzipien sowie die teilnehmerspezifischen Vertragsdaten umfassend Preise, Boni, Abonnements, Sperren gespeichert sind, sowie unter Zugriff auf vergleichbare Gebührendatenbanken (7, 9) von an der Verbindung beteiligter Dienste- oder Contentanbieter (6) und beteiligter Telekommunikations- und Übertragungsnetze (3, 5),
wobei der diensteanbieterseitige Zugriff auf die Gebührendatenbanken (7,9) der beteiligten Dienste- und Contentanbieter (6) und Telekommunikationsnetze (3) je nach realisierter Ausführungsart entweder automatisch **durch** direkte Übermittlung der anteiligen Kosten **durch** die beteiligten Instanzen (6,3) erfolgt, als Antwort auf eine spezifische diensteanbieterseitige Anfrage zu Beginn jeder Verbindung, oder als ein automatischer diensteanbieterseitiger Zugriff auf die entsprechenden Datensätze der Datenbanken (7,9) der beteiligten Instanzen (6,3), wobei eine diensteanbieterseitige Übermittlung besonders gekennzeichneter Prognosedaten (Angebotskosten) für bevorstehende kostenintensive Dienste- oder Übertragungsangebote erfolgt, die unter Ermittlung der betreffenden Service- und/oder Übertragungskosten in Zusammenarbeit mit den angeschlossenen Instanzen (6) und Kommunikationsnetzen (3) durchgeführt wird, **dadurch** gekennzeichnet, dass der Teilnehmer über zusätzliche endgeräteseitige Menuepunkte eine Inanspruchnahme von Dienstleistungen und/oder Übertragungen zu einem späteren Zeitpunkt beauftragen kann, zu dem eine kostengünstigere Inanspruchnahme **durch** automatische endgeräteseitige oder alternativ diensteanbieterseitige Aktivierung erfolgt, wobei der Teilnehmer eine sofortige Übertragung der angebotenen Daten eines entfernten Internet Service Provider zum Diensteanbieter (4) einleiten kann, wobei die Datenübertragung der betreffenden Daten zwischen Diensteanbieter (4) und Endgerät (1) zu einem späteren Zeitpunkt getrennt erfolgt.

2. Verfahren gemäß Anspruch 1, **dadurch gekennzeichnet, daß** die durch die beteiligten Instanzen (4,6,3) entstandenen anteiligen Kosten vorzugsweise automatisch aktualisiert werden.

3. Verfahren gemäß einem der Ansprüche 1 oder 2, **dadurch gekennzeichnet, daß** der Datenzugriff auf die Datenbanken (7,9) sowie die übertragenen Daten vorzugsweise mittels geeigneter Verfahren gegen Mißbrauch geschützt werden.

4. Verfahren gemäß einem der Ansprüche 1 bis 3, **dadurch gekennzeichnet, daß** die diensteanbieterseitig zu übertragenden Gebühreninformationen zum Endgerät (1) optional über teilnehmerseitige Konfiguration in Art und Umfang der Zustellung konfiguriert werden.

5. Verfahren gemäß einem der Ansprüche 1 bis 4, **dadurch gekennzeichnet, daß** eine automatische permanent aktualisierte Zustellung nur der Gebührensumme oder eines Einzelnachweises über die Gebühren erfolgt.

6. Verfahren gemäß einem der Ansprüche 1 bis 5, **dadurch gekennzeichnet, daß** eine teilnehmerseitige Betrachtung der Gebührendaten in der Diensteanbieter-Datenbank erfolgt, wobei die teilnehmerseitige Konfigurationsmöglichkeit vorzugsweise mittels geeigneter Verfahren gegen Mißbrauch geschützt ist.

7. Verfahren gemäß einem der Ansprüche 1 bis 6, **dadurch gekennzeichnet, daß** die Gebühreninformation bedarfweise endgeräteseitig teilnehmerindividuell aufbereitet und in mehr oder weniger detaillierter Form am Endgerät (1) des Teilnehmers zur Anzeige gebracht wird.

8. Verfahren gemäß einem der Ansprüche 1 bis 7, **dadurch gekennzeichnet, daß** bedarfsweise eine Nachbearbeitung der Gebührendaten im Endgerät (1) des Teilnehmers erfolgt, wobei unterschiedliche Anzeigeformate und Detaillierungsgrade darstellbar sind.

9. Verfahren gemäß einem der Ansprüche 1 bis 8, **dadurch gekennzeichnet, daß** ein endgeräteseitiger Softwareanteil (Client), der mit der Gebührendatenbank des Diensteanbieters (4) zusammenarbeitet, unmittelbar innerhalb der Zugangs- oder Browsersoftware angeordnet ist.

## Claims

1. Method for the display of transmission and service costs of a subscriber when using telecommunications networks, in particular for packet-oriented data transmission in telecommunications networks, as well as for internet and online data, wherein the service provider (4) determines charge information on the total costs arising during a current connection, with access to its own charge database in which charge data management is effected, and transmits it after the connection on request or automatically to the terminal (1) of the subscriber, **characterised by** determination and transmission of the charge information to the terminal (1) always up to date even during a connection, with access to the charge database in which are stored all subscriber-specific and service-specific charge principles as well as the subscriber-specific contract data including prices, premiums, subscriptions, bars, etc., as well as with access to comparable charge databases (7, 9) of service or content providers (6) involved in the connection and telecommunications and transmission networks (3, 5) involved, wherein access by the service provider to the charge databases (7, 9) of the service and content providers (6) involved and telecommunications networks (3) is effected, depending on the embodiment realised, either automatically by direct transmission of the proportionate costs by the entities involved (6, 3), in reply to a specific request by the service provider at the beginning of each connection, or as automatic service provider access to the corresponding data records of the databases (7, 9) of the entities involved (6, 3), wherein transmission by the service provider of specially marked forecast data (costs of service) for imminent cost-intensive service or transmission packages is effected, which is carried out while determining the service and/or transmission costs concerned in cooperation with the connected entities (6) and communications networks (3), **characterised in that** the subscriber can, via additional menu items on the terminal, order utilisation of services and/or transmissions at a later time when cheaper utilisation is effected by automatic activation by the terminal or alternatively by the service provider, wherein the subscriber can initiate immediate transmission of the data provided by a remote internet service provider to the service provider (4), wherein data transmission of the data concerned between service provider (4) and terminal (1) is effected at a later time.

2. Method according to claim 1, **characterised in that** the proportionate costs incurred by the entities involved (4, 6, 3) are preferably updated automatically.

3. Method according to one of claims 1 or 2, **characterised in that** data access to the databases (7, 9) as well as the transmitted data are preferably protected against misuse by suitable methods.

4. Method according to one of claims 1 to 3, **characterised in that** the charge information to be transmitted by the service provider to the terminal (1) is optionally configured by subscriber configuration in the manner and scope of delivery.

5. Method according to one of claims 1 to 4, **characterised in that** automatic, permanently updated delivery only of the amount of charges or of an itemised report on the charges is effected.

6. Method according to one of claims 1 to 5, **characterised in that** viewing of the charge data by the subscriber is effected in the service provider database, wherein the possibility of configuration by the subscriber is preferably protected against misuse by suitable methods.

7. Method according to one of claims 1 to 6, **characterised in that**, if required, the charge information is processed individually for the subscriber in the terminal and displayed on the terminal (1) of the subscriber in more or less detailed form.

8. Method according to one of claims 1 to 7, **characterised in that**, if required, follow-up processing of the charge data in the terminal (1) of the subscriber is effected, wherein different display formats and degrees of detail can be displayed.

9. Method according to one of claims 1 to 8, **characterised in that** a software component (client) on the terminal side, which cooperates with the charge database of the service provider (4), is arranged directly within the access or browser software.

## Revendications

1. Procédé pour afficher des coûts de transmission et de services d'un abonné lors de l'utilisation de réseaux de télécommunication, en particulier pour la transmission de données par paquets dans des réseaux de télécommunication et pour des données Internet et en ligne, étant précisé que le fournisseur de services (4) détermine pendant une connexion en cours une information de taxation sur les coûts totaux engendrés, en accédant à sa propre banque de données de taxation dans laquelle a lieu une gestion des données de taxation, et transmet cette information au terminal (1) de l'abonné, après la connexion, à la demande ou automatiquement, **caractérisé par** la détermination et la transmission toujours actualisées de l'information de taxation au terminal (1) même pendant une connexion, grâce à l'accès à la banque de données de taxation dans laquelle sont stockés tous les principes de taxation propres à l'abonné et propres aux services ainsi que les données contractuelles propres à l'abonné, comprenant les prix, les bonus, les abonnements, les interdictions, et grâce à l'accès à des banques de données de taxation comparables (7, 9) de fournisseurs de services ou de contenu (6) participant à la connexion et de réseaux de télécommunication et de transmission (3, 5) impliqués,
étant précisé que l'accès, côté fournisseur de services, aux banques de données de taxation (7, 9) des fournisseurs de services et de contenu (6) et réseaux de télécommunication (3) impliqués se fait, suivant le mode de réalisation, soit automatiquement grâce à la transmission directe des coûts proportionnels par les instances (6, 3) impliquées, comme réponse à une demande propre côté fournisseur de services, au début de chaque connexion, soit sous la forme d'un accès automatique, côté fournisseur de services, aux ensembles de données correspondants des banques de données (7, 9) des instances (6, 3) impliquées, étant précisé qu'une transmission, côté fournisseur de services, de données prévisionnelles particulièrement caractérisées (coûts d'offres) a lieu pour les offres de services ou de transmission coûteuses en perspective, laquelle transmission est réalisée à l'aide de la détermination des coûts de services et/ou de transmission concernés, en coopération avec les instances (6) et réseaux de communication (3) connectés,
**caractérisé en ce que** l'abonné, par l'intermédiaire d'options de menu supplémentaires côté terminal, peut demander à utiliser des services et/ou des transmissions à un moment ultérieur, où une utilisation moins coûteuse a lieu grâce à une activation automatique côté terminal ou, à titre de variante, côté fournisseur de services, étant précisé que l'abonné peut déclencher une transmission immédiate des données proposées d'un fournisseur de services Internet éloigné vers le fournisseur de services (4), et que la transmission des données concernées entre le fournisseur de services (4) et le terminal (1) se fait séparément à un moment ultérieur.

2. Procédé selon la revendication 1, **caractérisé en ce que** les coûts proportionnels entraînés par les instances (4, 6, 3) impliquées sont de préférence actualisés automatiquement.

3. Procédé selon l'une des revendications 1 ou 2, **caractérisé en ce que** l'accès aux banques de données (7, 9) et les données transmises sont de préférence protégés contre un usage abusif, à l'aide de procédés appropriés.

4. Procédé selon l'une des revendications 1 à 3, **caractérisé en ce que** les informations de taxation à transmettre, côté fournisseur de service, au terminal (1) sont configurées à titre optionnel par l'intermédiaire d'une configuration côté abonné pour définir le type et le volume de la fourniture.

5. Procédé selon l'une des revendications 1 à 4, **caractérisé en ce qu'**une fourniture automatique, actualisée en permanence, uniquement de la somme des frais ou d'un justificatif individuel sur les frais a lieu.

6. Procédé selon l'une des revendications 1 à 5, **caractérisé en ce qu'**un examen, côté abonné, des données de taxation a lieu dans la banque de données de fournisseur de services, étant précisé que la possibilité de configuration côté abonné est de préférence protégée d'un usage abusif à l'aide de procédés appropriés.

7. Procédé selon l'une des revendications 1 à 6, **caractérisé en ce que** l'information de taxation est au besoin traitée individuellement pour chaque abonné, côté terminal, et s'affiche sous une forme plus ou moins détaillée sur le terminal (1) de l'abonné.

8. Procédé selon l'une des revendications 1 à 7, **caractérisé en ce qu'**au besoin un post-traitement des données de taxation a lieu dans le terminal (1) de l'abonné, étant précisé que différents formats d'affichage et degrés de détail peuvent être présentés.

9. Procédé selon l'une des revendications 1 à 8, **caractérisé en ce qu'**un élément logiciel côté terminal (Client) qui coopère avec la banque de données de taxation du fournisseur de services (4) est disposé directement à l'intérieur du logiciel d'accès ou de navigateur.
